# EUROPEAN PATENT APPLICATION

(11) **EP 1 462 832 A2**
(43) Date of publication of application: **29.09.2004**
(21) Application number: 04003870.5
(22) Date of filing: 20.02.2004
(51) Int. Cl.: G02B 6/27

(54) **Method of and apparatus for aligning the stress-applying parts of polarization-maintaining optical fiber, and method of and apparatus for manufacturing a polarization-maintaining coupler**

(30) Priority: 13.03.2003 JP 2003068721
(71) Applicant: FUJIKURA LTD., Koto-ku Tokyo (JP)
(72) Inventor: Tanaka, Takeshi, Sakura-shi Chiba (JP)
(74) Representative: Grünecker, Kinkeldey, Stockmair & Schwanhäusser Anwaltssozietät

(57) **Abstract**

While a pair of left/right observation points of a cladding removed portion of a polarization-maintaining optical fiber are being simultaneously observed, the polarization-maintaining optical fiber is rotated about the axis of the fiber. By doing so, aligning stress applying parts in regard to the polarization-maintaining optical fiber is performed so that the polarization directions may be oriented in the same direction along and with respect to the axis of the fiber.

## Description

### CROSS REFERENCE TO RELATED APPLICATIONS

This application is based upon and claims the benefit of priority from the prior Japanese Patent Application No. P2003-068721, filed on March 13, 2003; the entire contents of which are incorporated herein by reference.

### BACKGROUND OF THE INVENTION

### Field of the Invention

The present invention relates to a method of and an apparatus for aligning stress applying parts of a polarization-maintaining optical fiber, and a method of and an apparatus for manufacturing a polarization-maintaining coupler.

### Description of the Related Art

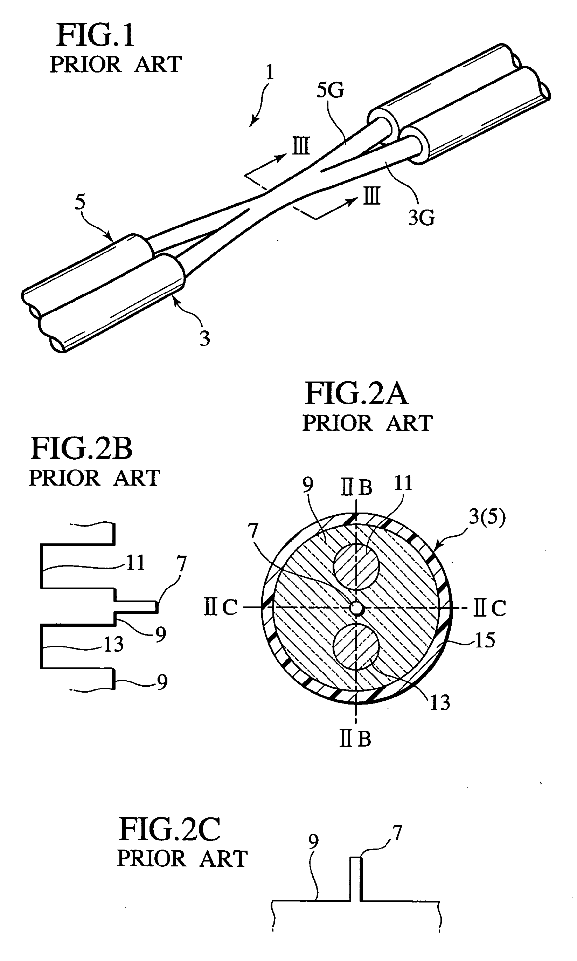

A conventional polarization-maintaining coupler 1 illustrated in Fig. 1 is formed by optically coupling a cladding removed portion 3G of a first polarization-maintaining optical fiber 3 and a cladding removed portion 5G of a second polarization-maintaining optical fiber 5. Each of these polarization-maintaining optical fibers 3, 5 are comprised of a PANDA fiber such as illustrated in Fig. 2A, and having a core 7, a cladding 9 being disposed around the core 7, a pair of stress applying parts 11, 13 being disposed within the cladding 9 and being disposed symmetrically about the core 7, and a cladding layer 15.

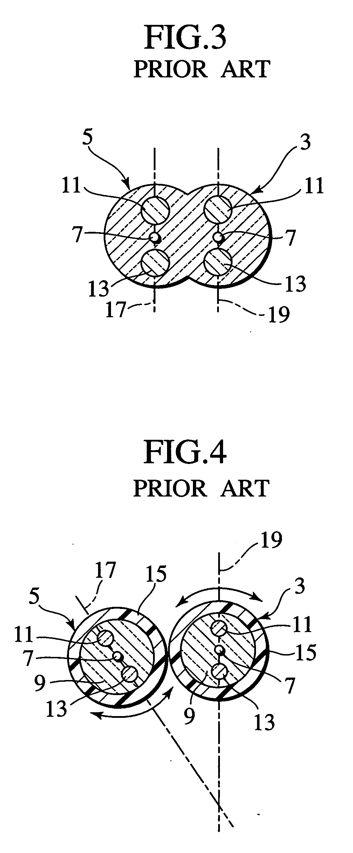

When manufacturing the polarization-maintaining coupler 1, it is necessary to bring into position a first polarization direction of the cladding removed portion 3G of a first polarization-maintaining optical fiber 3 in parallel with a second polarization direction of the cladding removed portion 5G of a second polarization-maintaining optical fiber 5 to be abut on the first polarization-maintaining optical fiber 3. As illustrated in Figs. 3 and 4, a line 17 connecting the pair of stress applying parts 11, 13 in the first polarization-maintaining optical fiber 3 defines the first polarization direction. Also, a line 19 connecting the pair of stress applying parts 11, 13 in the second polarization-maintaining optical fiber 5 defines the second polarization direction.

A conventional method (hereinafter, called first conventional method) of manufacturing the polarization-maintaining coupler 1 will hereafter be explained concretely.

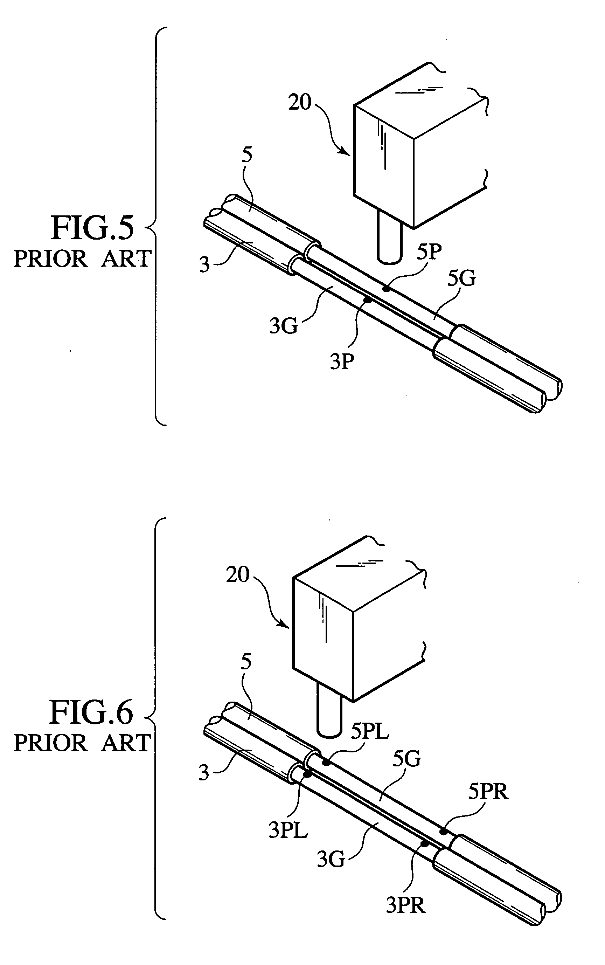

First, as illustrated in Fig. 5, the first polarization-maintaining optical fiber 3 is rotated about a center of the fiber 3 while a first observation point 3P of the cladding removed portion 3G at the first polarization-maintaining optical fiber 3 is observed using an observing head 20, to thereby cause the first polarization direction of the first observation point 3P to be oriented in a prescribed direction.

This operation referred to as " the one-point observation".

Next, the second polarization-maintaining optical fiber 5 is rotated about a center of the fiber 5 while a second observation point 5P of the cladding removed portion 5G of the first polarization-maintaining optical fiber 5 is observed using the observing head 20, to thereby cause the second polarization direction at a left-biased second observation point 5P to be oriented in the same direction of first polarization-direction of the first polarization-maintaining optical fiber 3. That is, the second polarization direction made parallel with the first polarization direction. Incidentally, this operation is also referred to as "the one-point observation".

Subsequently, the cladding removed portion 3G of the first polarization-maintaining optical fiber 3 and the cladding removed portion 5G of the second polarization-maintaining optical fiber 5 are fusion-elongated.

Through the above-described operation, while the first polarization direction on the cladding removed portion 3G of the first polarization-maintaining optical fiber 3 and the second polarization direction on the cladding removed portion 5G of the second polarization-maintaining optical fiber 5 are kept parallel with each other, the cladding removed portion 3G of the first polarization-maintaining optical fiber 3 and the cladding removed portion 5G of the second polarization-maintaining optical fiber 5 are optically coupled to enable manufacturing the polarization-maintaining coupler 1.

According to the first conventional method, in a case where positioning the first and second polarization direction one another by the above-described so-called "one-point observation", however, deviation in the longitudinal direction of the fibers 3 and 5 is not corrected, and therefore the polarization-maintaining coupler 1 becomes likely to be a defective product. In view of this, in another conventional method (hereinafter, called second conventional method) of manufacturing the polarization-maintaining coupler 1, in place of aligning the first (second) polarization direction by the so-called "the one-point observation", there is used a technique of aligning the first polarization-direction with a so-called "two-point observation" and aligning the second polarization direction with the so-called "two-point observation". Next, the second conventional method of manufacturing a polarization-maintaining coupler will be explained below.

First, while a left-biased first observation point 3PL (or a right-biased first observation point 3PR) on the cladding removed portion 3G of the first polarization-maintaining optical fiber 3 is observed by the observing head 20, the first polarization-maintaining optical fiber 3 is rotated about the center of the fiber 3 so that the first polarization direction at the left-biased first observation point 3PL (or the right-biased first observation point 3PR) is oriented in a prescribed direction. This operation is referred to as "the first-time rotating operation for the first polarization-maintaining optical fiber 3".

Subsequently, while the right-biased first observation point 3PR (or the left-biased first observation point 3PL) on the cladding removed portion 3G of the first polarization-maintaining optical fiber 3 is observed, the first polarization-maintaining optical fiber 3 is rotated about the center of the fiber 3 so that the first polarization direction at the right-biased first observation point 3PR (or the left-biased first observation point 3PL) is oriented in the prescribed direction. This operation is referred to as "the second-time rotating operation for the first polarization-maintaining optical fiber 3". However, during the rotating operation of left observation point 3PL (right observation point 3PR) of the first polarization-maintaining optical fiber 3, the right observation point 3PR may be rotated in conjunction with the rotation of the left observation point 3PL. Hence, the rotating operation of the first polarization-maintaining optical fiber 3 is repeatedly performed a plurality of times until the first polarization direction at each of the left and right observation points 3PL, 3PR becomes oriented in the same prescribed direction. Through this operation, between the left-biased first observation point 3PL and the right-biased first observation point 3PR, regarding the first polarization-maintaining optical fiber 3, aligning the stress applying parts 11, 13 can be performed so that the first polarization direction is oriented in the prescribed direction. In addition, aligning method described above is referred to as "the two-point observation".

After aligning the stress applying parts 11, 13 in regard to the first polarization-maintaining optical fiber 3, while a left-biased second observation point 5PL (or a right-biased second observation point 5PR) on the cladding removed portion 5G of the second polarization-maintaining optical fiber 5 is observed by the observing head 20, the first polarization-maintaining optical fiber 5 is rotated about the center of the fiber 5 so that the second polarization direction at the left-biased second observation point 5PL (or the right-biased second observation point 5PR) is oriented in the prescribed direction. This operation is referred to as "the first-time rotating operation for the second polarization-maintaining optical fiber 5". Subsequently, while a right-biased second observation point 5PR (or a left-biased second observation point 5PL) on the cladding removed portion 5G of the second polarization-maintaining optical fiber 5 is observed, the second polarization-maintaining optical fiber 5 is rotated about the center of the fiber 5 so that the second polarization direction at the right-biased second observation point 5PR (or the left-biased second observation point 5PL) is oriented in the prescribed direction. This operation is referred to as "the second-time rotating operation for the second polarization-maintaining optical fiber 5". However, while the rotating operation of left observation point 5PL (right observation point 5PR) of the first polarization-maintaining optical fiber 3 is performed, the right observation point 5PR may be rotated in conjunction with the rotation of the left observation point 5PL. Hence, the rotating operation of the first polarization-maintaining optical fiber 5 is repeatedly performed a plurality of times until the first polarization direction at each of the left and right observation points 5PL, 5PR becomes oriented in the same prescribed direction. Through this operation, between the left-biased second observation point 5PL and the right-biased second observation point 5PR, regarding the second polarization-maintaining optical fiber 5, aligning the stress applying parts 11, 13 can be performed so that the second polarization direction is parallel with the first polarization direction. In addition, aligning method described above is referred to as "the two-point observation".

After aligning the stress applying parts 11, 13 in regard to the second polarization-maintaining optical fiber 5, the cladding removed portion 3G of the first polarization-maintaining optical fiber 3 and the cladding removed portion 5G of the second polarization-maintaining optical fiber 5 are fusion-elongated.

Through the above-described operation, while the first polarization direction on the cladding removed portion 3G of the first polarization-maintaining optical fiber 3 and the second polarization direction on the cladding removed portion 5G of the second polarization-maintaining optical fiber 5 are kept parallel with each other, the cladding removed portion 3G of the first polarization-maintaining optical fiber 3 and the cladding removed portion 5G of the second polarization-maintaining optical fiber 5 are optically coupled to enable manufacturing the polarization-maintaining coupler 1. Incidentally, as the related material of the present invention, there is a first related material (Japanese Patent No. 2649271) and a second related material (Japanese Patent Application Laid-Open Publication No. 2001-228354).

According to the above-described second conventional method of manufacturing a polarization-maintaining coupler, it is possible to reduce the defective polarization-maintaining coupler. However, there is still the possibility that due to the rotating operation of the first polarization-maintaining optical fiber 3 (the second polarization-maintaining optical fiber 5), the first polarization direction (the second polarization direction) at the first observation point on a side where no observation is made can be move while the rotating operation is performed. For this reason, the number of those rotating operations for the first polarization-maintaining optical fiber 3 (the second polarization-maintaining optical fiber 5) increases. As a result of this, hours of work for aligning the stress applying parts in regard to the first polarization-maintaining optical fiber 3 (the second polarization-maintaining optical fiber 5) increases. As a result of this, hours of work for manufacturing the polarization-maintaining coupler 1 also increases.

### SUMMARY OF THE INVENTION

A method of manufacturing a polarization-maintaining optical fiber according to the present invention has been made in order to solve the above-described problems, and the method comprising the steps of: observing a left-biased observation point and a right-biased observation point of a cladding removed portion of the polarization-maintaining optical fiber simultaneously; and, rotating the polarization-maintaining optical fiber about the axis of the fiber while the left and right observation points are being simultaneously observed, aligning stress applying parts in regard to the polarization-maintaining optical fiber so that, between the left-biased observation point and the right-biased observation point, the polarization directions is oriented in the same direction.

Here, a middle-point being located between the left-biased point and the right-biased point can also be observed for high accuracy.

### BRIEF DESCRIPTION OF THE DRAWINGS

Fig. 1 is a view illustrating a polarization-maintaining coupler;
Fig. 2A is a sectional view of a PANDA fiber that exemplifies the polarization-maintaining fiber;
Fig. 2B is a refraction distribution view taken along a line IIB-IIB of Fig. 2A;
Fig. 2C is a refraction distribution view taken along a line IIC-IIC of Fig. 2A;
Fig. 3 is a view taken along a line III-III of Fig. 1;
Fig. 4 is a view illustrating first and second polarization-maintaining optical fibers that are prior to alignment;
Fig. 5 is a perspective view for explaining first conventional method for aligning the polarization direction performed by a so-called "one-point observation";
Fig. 6 is a perspective view for explaining a second conventional method for aligning the polarization direction performed by a so-called "two-point observation";
Fig. 7 is a perspective view of a main part of a stress-applying part aligning apparatus according to an embodiment of the present invention;
Fig. 8 is a view illustrating the relationship between a microscope and a CCD camera in the stress applying part aligning apparatus according to the embodiment of the present invention;
Fig. 9 is a typical plan view of a manufacturing apparatus for a polarization-maintaining coupler according to the embodiment of the present invention; and
Figs. 10A, 10B, and 10C is a explanatory view that shows aligning method of the present invention.

### DETAILED DESCRIPTION OF THE INVENTION

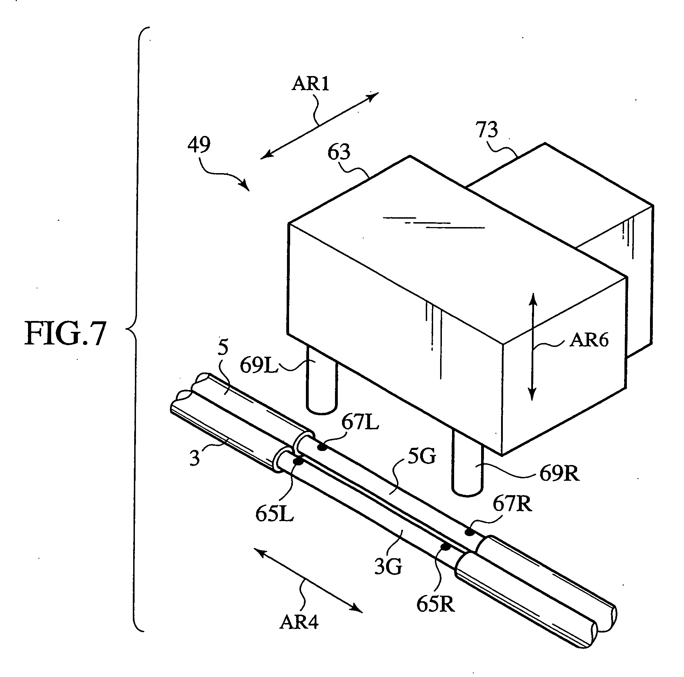

An embodiment of the present invention will hereafter be explained with reference to Figs. 7 to 10.

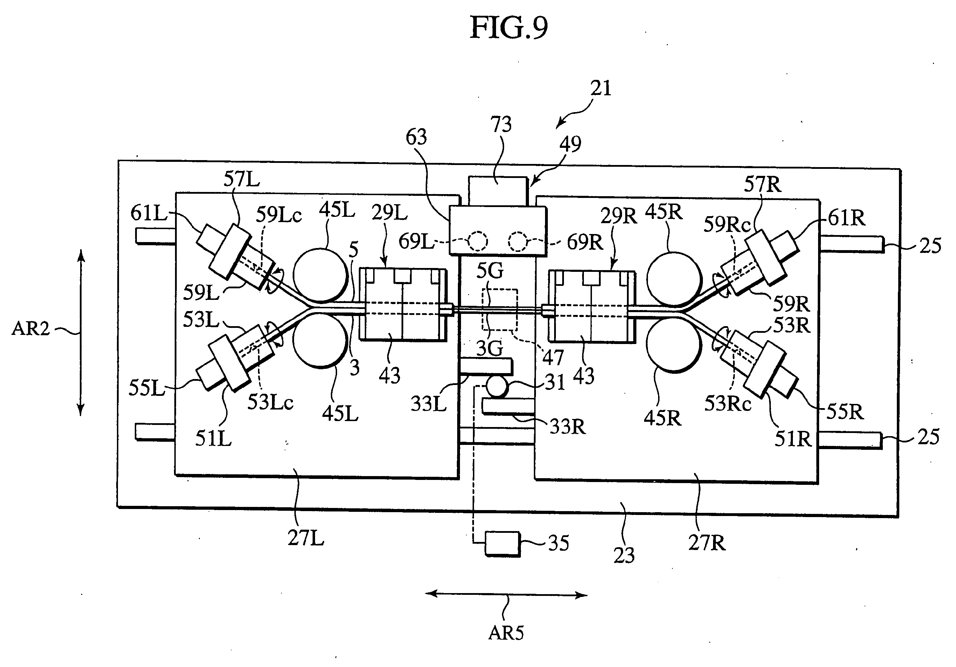

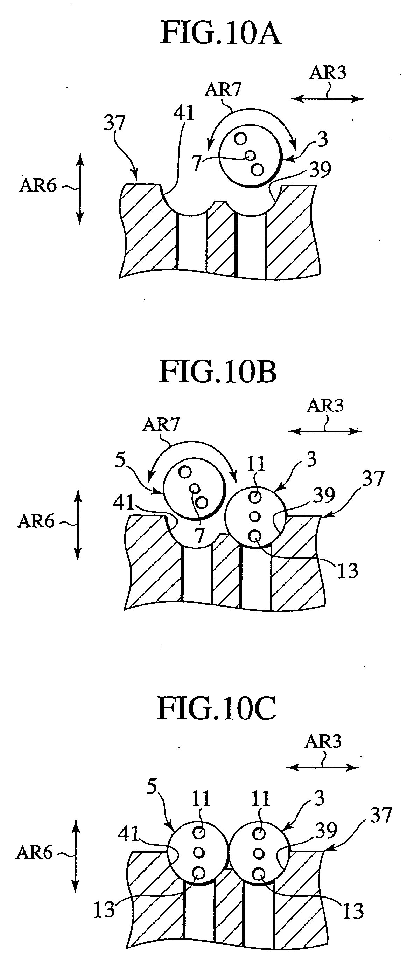

In the following description, the wording "back-and-forth direction" is defined as being the direction indicated by the arrow AR1 in Fig. 7, the direction indicated by the arrow AR2 in Fig. 9, and the direction indicated by the arrow AR3 in Figs. 10A to 10C. Also, similarly, the wording "left-and-right direction" is defined as being the direction indicated by the arrow AR4 in Fig. 7, the direction indicated by the arrow AR5 in Fig. 9, and the direction in each of Figs. 10A to 10C that goes from the obverse surface of the drawing sheet toward the reverse surface thereof. Also, the wording "up-and-down direction" is defined as being the direction indicated by the arrow AR6 in Figs. 7 and 10A to 10C, and the direction in Fig. 9 that goes from the obverse surface of the drawing sheet toward the reverse surface thereof.

As illustrated in Fig. 9, a manufacturing apparatus 21 is an apparatus for manufacturing a polarization-maintaining coupler 1 by optically coupling a cladding removed portion 3G of a first polarization-maintaining optical fiber 3 (hereinafter called PMF 3) and a cladding removed portion 5G of a second polarization-maintaining optical fiber 5 (hereinafter called PMF 5) while keeping parallel with each other a first polarization direction of the cladding removed portion 3G of the first PMF 3 and a second polarization direction of the cladding removed portion 5G of the second PMR 5. The manufacturing apparatus 21 has a main-body frame 23 that extends in the left-and-right direction.

A pair of guide rails 25, 25 extending in the left-and-right direction are provided on the main-body 23, and a pair of left and right movable base 27L, 27R freely moving in the left-and-right direction are provided on the pair of guide rails 25, 25. A left-clamp 29L that clamps an end portion of the cladding removed portion 3G of the first PMF 3 and an end portion of the cladding removed portion 5G of the second PMF 5 in a state where those end portions are kept adjacent to each other is provided on the movable base 27L. A right-clamp 29R that clamps an end portion of the cladding removed portion 3G of the first PMF 3 and an end portion of the cladding removed portion 5G of the second PMF 5 in a state where those end portions are kept adjacent to each other is provided on the movable base 27R.

In order to move the left-clamp 29L together with the right-clamp 29R in the left-and-right direction, a driving pinion 31 is rotatably disposed between the pair of movable bases 27L, 27R. And driven racks 33L, 33R engaging with the driving pinion are provided with the movable bases 27L, 27R accordingly. Also, a clamp-moving motor 35 connecting the driving pinion 31 is provided with a given position of the main-body frame 23.

With reference to Figs. 9 and 10A-C, a concrete construction of the clamps 29L, 29R will now be explained briefly. On the movable base 27L, 27R there is provided a clamp main-body 37 performing as a clamping base of the clamps 29L, 29R. A first adsorbing portion 39 absorbing and retaining the first PMF 3, and a second adsorbing portion 41 absorbing and retaining the second PMF 5 are provided on the upside of the clamp-main body 37 of the clamp base 29L, 29R. In addition, the absorbing portions 39, 41 are located each other in the back-and-forth direction. Further, on the upside of each clamp main-body 37, there is provided a clamp cover 43 to cover and retain the PMF 3 and PMF 5 on the absorbing portions 39, 41.

A pair of supporting pins 45L, 45L holding the first and second PMF 3, 5 inside thereof are provided on the left side of the left-clamp 29L on the movable base 27L. Also, a pair of supporting pins 45R, 45R holding the first and second PMF 3, 5 are provided on the right side of the right-clamp 29R on the movable base 27R.

Further, on the main-body frame 23, there is provided a gas burner 47 that heats the cladding removed portion 3G of the first PMF 3 and the cladding removed portion 5G of the second PMF 5 from below in a state where both the cladding removed portion 3G and the cladding removed portion 5G are in contact with each other. In addition, the gas burner 47 is movably attached to the main-body frame 23 by means of a suitable position-adjusting mechanism (not illustrated), and therefore the gas burner 47 is positioned at suitable position between the left-clamp 29L and right-clamp 29R.

Next, a stress-applying part aligning apparatus 49 that constitutes a main part of the polarization-maintaining coupler manufacturing apparatus 21 will be explained in detail.

A first left supporting member 51L which has a first left rotating clamp 53L clamping the first polarization-maintaining optical fiber 3 is provided on the frontward part of the movable base 27L. The first left rotating clamp 53L rotates about a clamping portion 53Lc by the torque of a first left rotating motor 55L. Similarly, a first right supporting member 51R which has a first right rotating clamp 53R clamping the first polarization-maintaining optical fiber 3 is provided on the frontward part of the movable base 27R. The first right rotating clamp 53R rotates about a clamping portion 53Rc by the torque of a first right rotating motor 55R.

A second left supporting member 57L which has a second left rotating clamp 59L clamping the second PMF 5 is provided on the rearward part of the movable base 27L. The second left rotating clamp 59L rotates about a clamping portion 59Lc by the torque of a second left rotating motor 61L.

Similarly, a second right supporting member 57R which a second right rotating clamp 59R clamping the second PMF 5 is provided on the rearward part of the movable base 27R. The second right rotating clamp 59R rotates about a clamping portion 59Rc by the torque of a second right rotating motor 61R.

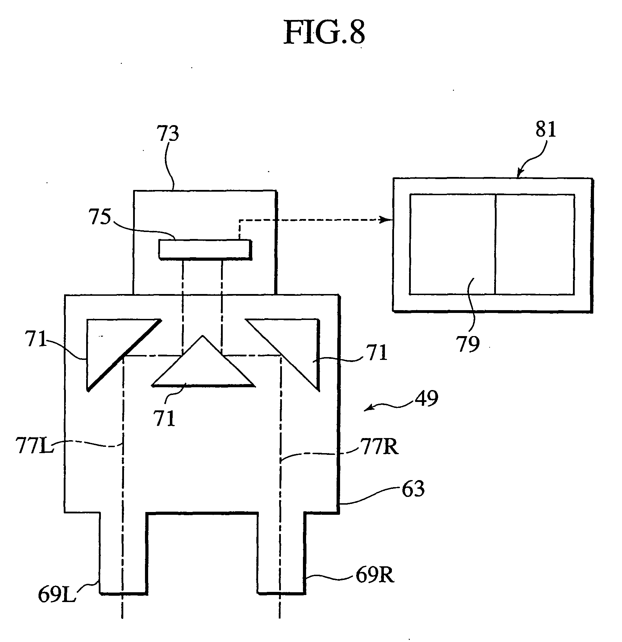

With reference to Figs. 8 and 9, a microscope 63 is provided above the movable bases 27L, 27R of the main-body frame 23. The microscope 63 includes a left observing head 69L for observing a left-biased observation point 65L of the cladding removed portion 3G of the first PMF 3 and a left-biased observation point 67L of the cladding removed portion 5G of the second PMF 5, a right observing head 69R for observing a right-biased observation point 65R of the cladding removed portion 3G of the first PMF 3 and a right-biased observation point 67R of the cladding removed portion 5G of the second PMF 5, and a plurality of prisms 71. The microscope 63 is movable in the back-and-forth direction by the driving force of a back and forth moving motor (not illustrated).

The microscope 63 further comprises a CCD camera 73 with a CCD (Charge-Coupled Devices) 75 that photographs the left-biased first observation point 65L, the right-biased first observation point 65R, the left-biased second observation point 67L, and the right-biased second observation point 67R accordingly. The CCD 75 comprising a first light-receiving surface and a second light-receiving surface, and is optically connected to the left and right observing heads 69L, 69R via plurality of the prisms 71. The first light-receiving surface receives the light 77L which guides a image being captured by the left observing head 69L, and the second light-receiving surface receives the light 77R which guides a image being captured by the right observing head 69R.

An image-processing device 79 is provided with/in the vicinity of the main-body frame 23. The image-processing device 79 is electrically connected to the CCD camera 73 and is equipped with a display panel 81. The image-processing device 79 calculates a luminance distribution to be shown on the display panel 81, the luminance distribution is calculated based on the captured images at the pair of left/right first observation points 65L, 65R and at the pair of left/right second observation points 67L, 67R.

Accordingly, by simultaneously observing the pair of left/right first observation points 65L, 65R (or the pair of left/right second observation points 67L, 67R) using the left observing head 69L and right observing head 69R while lighting up the cladding removed portion 3G of the first PMF 3 (or the cladding removed portion 5G of the second PMF 5) from below by using a light source (not illustrated), the images of the pair of left/right first observation points 65L, 65R (or the pair of left/right second observation points 67L, 67R) are captured by the CCD camera 73.

Next, a method of manufacturing a polarization-maintaining coupler according to an exemplary embodiment of the present invention will be explained together with the function thereof. Incidentally, this method of manufacturing a polarization-maintaining coupler comprises (I) a first aligning step, (II) a second aligning step, and (III) a fusion-elongating step.

### I. First aligning step

By driving the back and forth moving motor, the microscope 63 is moved frontwardly. Thereby, the left observing head 69L and right observing head 69R are respectively positioned right above the left-biased observation point 65L and right-biased observation point 65R accordingly. Then the pair of left/right first observation points 65L, 65R are simultaneously observed. In other words, the image processed luminance distributions based on the captured those fiber's images from the pair of left and right first observation points 65L, 65R are displayed on the display panel 81. And, while those simultaneous observations are being made, in a state where the first PMF 3 is clamped with the pair of first rotating clamps 53L, 53R, the first PMF 3 is rotated about the center of the fiber 3 (the fiber axis) in the arrow-AR7-indicated directions (see Fig. 10A) by the first rotating motors 55L, 55R. By rotating the first PMF 3, the luminance distributions corresponding to the first PMF 3's position are changed. Hence, the luminance distributions when the stress applying parts 11, 13 are aligned at the prescribed position are different from the luminance distributions when the stress applying parts 11, 13 are not aligned correctly. Incidentally, whether or not the luminance distributions based on the fiber images from the pair of left/right observation points 65L, 65R match with the prescribed luminance distributions is determined with, for example, a known method shown in the Japanese Patent No. 2649271.

Further, the left(right) portion of the cladding removed portion 3G of the first PMF 3 is adsorbed and retained by the first adsorbing portions 39 of the left(right)-clamp 29L(29R). As a result of this, the state where the stress applying parts 11, 13 being aligned is maintained regarding the first PMF 3 (see Fig. 10B).

### II. Second aligning step

After the above-described first aligning step, the back and forth moving motor moves the microscope 63 slightly backwardly. By doing so, the left observing head 69L and right observing head 69R are respectively positioned right above the left-biased observation point 67L, and right above right-biased observation point 67R, of the cladding removed portion 5G of the second PMF 5. And, using the left observing head 69L and right observing head 69R, the pair of left/right second observation points 67L and 67R are simultaneously observed. In other words, the image processed luminance distributions corresponding to the captured fiber images showing the state of the pair of left right second observation points 67L, 67R are displayed on the display panel 81.

And, while those simultaneous observations are being made, in a state where the second PMF 5 is clamped with the pair of second rotating clamps 55L, 55R, the second PMF 5 is rotated about the center of the fiber 5(the fiber axis) in the arrow-AR7-indicated directions by the second rotating motors 55L and 55R.

By rotating the second PMF 5, the luminance distributions corresponding to the first PMF 5's position are changed. Hence, the luminance distributions when the stress applying parts 11, 13 are aligned as desired are different from the luminance distributions when the stress applying parts 11, 13 are not aligned correctly.

Incidentally, whether or not the luminance distributions based on the fiber images from the pair of left/right observation points 67L, 67R match with the prescribed luminance distributions is determined with, for example, a known method that is shown in the Japanese Patent No. 2649271.

Further, the left(right) portion of the cladding removed portion 5G of the first PMF 5 is adsorbed and retained by the first adsorbing portions 41 of the left(right)-clamp 29L(29R). As a result of this, the state where the stress applying parts 11, 13 being aligned is maintained regarding the first PMF 3 (see Fig. 10C).

Incidentally, the second step can perform before the first step.

### III. Fusion-elongating step

After the first aligning step and second aligning step, the cladding removed portions 3G, 5G of the first and second PMFs 3, 5 are clamped and held by the clamp cover 43 of the left(right)-clamp 29L(29R) of the left(right)-clamp 29L(29R) in a state where the PMF 3 and PMF 5 are adjacent to each other in the back-and-forth direction.

And, the clamp-moving motor 35 simultaneously moves the left-clamp 29L and right-clamp 29R in the left-and-right direction to separate from/come close to one another in a condition where the cladding removed portion 3G and the cladding removed portion 5G are abating one another. During this operation, the cladding removed portion 3G of the first PMF 3 and the cladding removed portion 5G of the second PMF 5 are heated by the gas burner 47, and the cladding removed portion 3G of the first PMF 3 and the cladding removed portion 5G of the second PMF 5 are welded one another and elongated.

Through the above-described operations, it is possible to optically couple the cladding removed portion 3G of the first PMF 3 and the cladding removed portion 5G of the second PMF 5 while the first polarization direction and second polarization direction are maintained to be parallel one another, and to manufacture the polarization-maintaining coupler 1 (see Fig. 1).
Incidentally, after the third step, the fusion-elongated portion of the polarization-maintaining coupler 1 is reinforced appropriately (a detailed description of this step is omitted here).

According to the above-described embodiment of the present invention, it is possible to reduce the frequencies of the operation of rotating the first and second PMF 3 and 5, and is possible to reduce the working time to make the polarization-maintaining optical fiber. Additionally, it is also possible to increase the process yield.

Meanwhile, the present invention is not limited to the above-described exemplary embodiments of the invention, but permits various suitable changes or modifications to be made. For example, instead of displaying on the display panel 81 the luminance distribution based on the captured images of the fiber obtained from the pair of left/right observation points 65L, 65R (67L, 67R), the images of the fiber from the pair of left/right observation points 65L, 65R (67L, 67R) can be displayed on the display panel 81.

## Claims

1. A method of aligning an optical fiber, comprising:
observing a first observation point and a second observation point of a cladding removed portion of the optical fiber simultaneously;
rotating the optical fiber about the axis of the fiber while the first and second observation points are being simultaneously observed; and
aligning stress applying parts of the optical fiber so that, between the first observation point and the second observation point, the polarization directions of the optical fiber are oriented in the same direction.

2. The method according to claim 1, wherein the first observation point is a left-biased observation point, and the second observation point is a right-biased observation point.

3. An apparatus for aligning stress applying parts of an optical fiber, comprising:
a fiber-rotating means that rotates the polarization-maintaining optical fiber about the axis of the fiber;
a first observing means that observes a first observation point of a cladding removed portion of the optical fiber; and
a second observing means that observes a second observation point of the cladding removed portion of the optical fiber.

4. The apparatus according to claim 3, wherein the first observing means is a left observing means that observes a left-biased observation point, and the second observing means is a right observing means that observes a right-biased observation point.

5. The apparatus for aligning an optical fiber according to claim 3, further comprising:
a camera, optically connected to each of the first and second observing means, which photographs the first and second observation points; and
a display means, electrically connected to the camera, which displays images of the optical fiber from the first and second observation points or the luminance distributions of the images of the optical fiber.

6. A method of manufacturing a polarization-maintaining coupler, comprising:
rotating a first polarization-maintaining optical fiber about its axis, while simultaneously observing a first and second observation point of a cladding removed portion of the first polarization-maintaining optical fiber;
rotating a second polarization-maintaining optical fiber about its axis, which is parallel to the axis of the first polarization-maintaining optical fiber, while simultaneously observing a first and second observation point of a cladding removed portion of the second polarization-maintaining optical fiber; and
fusion-elongating the cladding removed portion of the first polarization-maintaining optical fiber and the cladding removed portion of the second polarization-maintaining optical fiber.

7. The method according to claim 6, wherein the first and second observation points of the first polarization-maintaining optical fiber are left-and right-biased points, respectively and the first and second observation points of the second polarization-maintaining optical fiber are left- and right-biased points, respectively.

8. An apparatus for manufacturing a polarization-maintaining coupler, comprising:
a first clamp that clamps an end portion of a cladding removed portion of a first polarization-maintaining optical fiber and an end portion of a cladding removed portion of a second polarization-maintaining optical fiber, such that both end portions are maintained adjacent to each other;
a second clamp that clamps an opposing end portion of the cladding removed portion of the first polarization-maintaining optical fiber and an opposing end portion of the cladding removed portion of the second polarization-maintaining optical fiber, such that both end portions and the cladding removed portions of both fibers between the first clamp and the second clamp are maintained adjacent to each other;
a clamp-moving means that moves at least one of the first clamp and the second in the direction of the axes of the first and second polarization-maintaining optical fibers;
a heater that heats the cladding removed portion of the first polarization-maintaining optical fiber and the cladding removed portion of the second polarization-maintaining optical fiber;
a rotator that respectively rotates the first and second polarization-maintaining optical fibers about the axes of the fibers;
a first observing means that respectively observes the first observation points of the cladding removed portions of the first and second polarization-maintaining optical fibers; and
a second observing means that respectively observes the second observation points of the cladding removed portions of the first and second polarization-maintaining optical fibers.

9. The apparatus according to claim 8, wherein
the first clamp is a left clamp and the second clamp is a right clamp; and
the first observing means is a left observing means that observes left-biased observation points of the cladding removed portions of the first and second polarization-maintaining optical fibers and the second observing means is a right observing means that observes right-biased observation points of the cladding removed portions of the first and second polarization-maintaining optical fibers.

10. The apparatus for manufacturing a polarization-maintaining coupler according to claim 8, further comprising:
a camera, optically connected to each of the first and second observing means, which photographs the first and second observation points of the cladding removed portion of the first polarization-maintaining optical fiber and the first and second observation points of the cladding portion of the second polarization-maintaining optical fiber; and
a display, electrically connected to the camera, which displays images of the first and second observation points of the first and second polarization-maintaining optical fibers or the luminance distributions of these images.

11. A method of aligning the polarization of an optical fiber, comprising:
simultaneously observing a first and a second observation point of a cladding-removed portion of the optical fiber;
rotating the optical fiber about its axis while observing the first and second observation points of the cladding-removed portion of the optical fiber; and
aligning the optical fiber such that its polarization at each observation point is oriented in a prescribed direction.

12. The method according to claim 11, wherein the first and second observation points are left and right observation points, respectively.

13. A method of aligning the polarization of a first and second optical fiber, comprising:
simultaneously observing a first and second observation point of a cladding-removed portion of the first optical fiber;
rotating the first optical fiber about its axis while observing the first and second observation points thereof;
aligning the first optical fiber such that its polarization at each observation point is oriented in a prescribed direction;
simultaneously observing a first and second observation point of a cladding-removed potion of the second optical fiber;
rotating the second optical fiber about its axis while observing the first and second observation points thereof; and
aligning the second optical fiber such that its polarization at each observation point is oriented in the same prescribed direction as that of the first optical fiber.

14. The method according to claim 13, wherein the first and second observation points are left and right observation points.

15. An apparatus for aligning the polarization of an optical fiber, comprising:
a first clamping means for holding a first end of an optical fiber;
a second clamping means for holding a second end of the optical fiber;
an observation means for simultaneously observing at least two observation points on the portion of the optical fiber between the first clamping means and the second clamping means; and
a rotating means for rotating the optical fiber about its axis.

16. The apparatus according to claim 15, wherein
the first and second clamping means are left and right clamping means respectively; and
the at least two observation points are a left and a right observation point.

17. An apparatus for aligning the polarization of an optical fiber, comprising:
a first clamp, which clamps a first end of the optical fiber;
a second clamp, which clamps a second end of the optical fiber;
an observation housing, disposed between said first clamp and said second clamp, comprising:
a first observation element,
a second observation element, and
positioning means for positioning said first observation element and said second observation element simultaneously at a first observation point on the optical fiber and a second observation point on the optical fiber, respectively;
a rotator, which rotates the optical fiber about its axis.

18. The apparatus according to claim 17, wherein
the first and second clamps are left and right clamps, respectively;
the first observation element and the second observation element are left and right observation elements; and
the first and second observation points are left and right observation points, respectively.

19. An apparatus for manufacturing a polarization-maintaining coupler, comprising:
a first clamp, which clamps the first ends of a first and second optical fiber;
a second clamp, which clamps the second ends of a first and second optical fiber;
an observation housing, disposed between said first clamp and said second clamp, comprising:
a first observation element,
a second observation element, and
positioning means for positioning said observation housing at a first position and at a second position, wherein
when said observation housing is in said first position said first observation element is positioned at a first observation point on said first optical fiber and said second observation element is positioned at a second observation point on said first optical fiber, and
when said observation housing is in said second position, said first observation element is positioned at a first observation pint on said second optical fiber and said second observation element is positioned at a second observation point on said second optical fiber;
a first rotator, which rotates said optical fiber about its axis; and
a second rotator which rotates said second optical fiber about its axis.

20. The apparatus according to claim 19, wherein:
the first and second clamps are left and right clamps, respectively;
the first observation element and the second observation element are left and right observation elements, respectively; and
the first observation point and the second observation point are left and right observation points, respectively.

21. The apparatus according to claim 19, further comprising:
a heating element, disposed between said first clamp and said second clamp, which heats the portions of said first and second optical fibers between said first and second clamps.

22. The apparatus according to claim 19, further comprising:
a first imager optically connected to said first observation element;
a second imager optically connected to said second observation element; and
a display means electrically connected to each of said first and second cameras, which receives images of said first and second observation points of said first optical fiber and of said first and second observation points on said second optical fiber from said first and second imagers, and which displays these images.
